# EUROPÄISCHE PATENTSCHRIFT

(11) **EP 0 552 464 B1**
(45) Veröffentlichungstag und Bekanntmachung des Hinweises auf die Patenterteilung: **09.08.1995**
(21) Anmeldenummer: 92121207.2
(22) Anmeldetag: 12.12.1992
(51) Int. Cl.: F16H 25/24, F16C 31/02

(54) **Spindelhubgetriebe**
Screw actuator
Vérin à vis

(30) Priorität: 24.01.1992 AT 113/92
(43) Veröffentlichungstag der Anmeldung: 28.07.1993
(73) Patentinhaber: Zimmermann, Jürgen, A-6900 Bregenz (AT)
(72) Erfinder: Zimmermann, Jürgen, A-6900 Bregenz (AT)
(74) Vertreter: Hefel, Herbert, Dipl.-Ing.

(56) Entgegenhaltungen:
- DD-A- 157 819
- DE-A- 3 815 318
- FR-A- 2 206 825
- US-A- 2 982 145
- US-A- 3 244 022

## Beschreibung

Die Erfindung bezieht sich auf ein Spindelhubgetriebe mit den Merkmalen des Oberbegriffes des Patentanspruches 1.

Spindelhubgetriebe, die auch Hubspindelgetriebe genannt werden, sind in zahlreichen verschiedenen Ausführungsformen bekannt geworden. Ihnen allen gemeinsam ist ein Getriebekasten mit einem Anschluß für einen Antriebsmotor und eine Gewindespindel, die bezogen auf den Getriebekasten ortsfest gelagert und die vom Motor antreibbar ist, sowie eine Mutter, die beim Drehen der Spindel entlang derselben wandert. An ihrer Außenseite besitzt die Mutter Einrichtungen, an welchen und mit welchen diejenigen Bauteile befestigt sind, die mit dem Spindelhubgetriebe verstellt werden müssen. In der Regel handelt es sich dabei um Gewindebohrungen zur Aufnahme von Befestigungsschrauben. Werden zur Verstellung eines Bauteiles paarweise angeordnete Spindelhubgetriebe vorgesehen, so arbeiten diese einwandfrei unter der Voraussetzung, daß die Spindeln beider Getriebe exakt parallel zueinander stehen. Fertigungs- und Montagetoleranzen sind zwar in engen Grenzen zu halten, aber nicht völlig auszuschließen mit der Folge, daß dadurch die Spindelhubgetriebe bzw. deren Bauteile ungleichmäßig belastet werden, was wiederum ungleichmäßige Abnutzungen nach sich zieht. Solche ungleichmäßige Belastungen sind auch die Ursache für Geräusche und Schwingungen. Auch wenn die Spindelhubgetriebe exakt montiert sind, können betriebsmäßige Belastungen Verformungen (Durchbiegungen der Spindel) hervorrufen, wenn auch in geringem Maß und auch solche betriebsmäßige Verformungen führen zu den bereits erwähnten Folgen.

Es wurden bereits Spindelhubgetriebe vorgeschlagen, die so konstruktiv gestaltet sind, daß sowohl belastungsbedingte Durchbiegungen der Gewindespindeln als auch ungleichförmige und ungleichmäßige Belastungen möglichst ausgeglichen werden, so daß keine exzentrischen Kräfte auf das Spindelhubgetriebe ausgeübt werden und damit alle lastübertragenden Bauteile gleichmäßig beansprucht werden. In diesem Zusammenhang sind die aus der FR-PS 22 06 825 und der DD-PS 157 819 bekannten Spindelhubgetriebe zu benennen, die jeweils eine von einem Gehäuse aufgenommene Mutter aufweisen, deren Außenfläche wenigstens zonenweise kugelig ausgebildet ist, wobei das Gehäuse bzw. Teile desselben mit dazu korrespondierenden Flächen an diesen kugeligen Zonen der Mutter anliegen, durch welche die Gewindespindel verläuft. Am Gehäuse sind jene Bauteile befestigbar, welche über das Spindelhubgetriebe verstellt werden sollen. Dank dieser vorbekannten Konstruktionen ist das Gehäuse mit dem daran befestigten Bauteil gegenüber der Gewindespindel etwas verstellbar, so daß Fertigungs- und Montagetoleranzen dadurch ausgleichbar sind. Es ist ferner zu bedenken, daß solche Spindelhubgetriebe oft hochbelastet sind und daher einer intensiven und ständigen Schmierung bedürfen. Bei den vorbekannten Konstruktionen müssen die Gewindespindeln von außen geschmiert werden, weil die entlang den Gewindespindeln verfahrenden und belasteten Muttern das Schmiermittel jeweils sozusagen vor sich her schieben, abgesehen davon, daß die jeweiligen Einlaufseiten der Gehäuse bei diesen vorbekannten Konstruktionen geradezu ideale Aufnahmeräume bilden für Staub und Schmutz, die dann in das Gewinde der Mutter eindringen und hier die Reibungsverhältnisse beeinträchtigen und den Verschleiß erhöhen.

Ausgehend von diesen erwähnten und bekannten Konstruktionen und den aufgezeigten Nachteilen ist es Ziel der Erfindung, Spindelhubgetriebe dieser Art dahingehend zu verbessern, daß sie in zweckmäßiger und dauerhafter Weise zu schmieren sind, damit sie ihre anfänglichen Laufeigenschaften beibehalten und damit der Verschleiß minimiert werden kann. Erfindungsgemäß gelingt dies durch jene Maßnahmen, die Inhalt und Gegenstand des kennzeichnenden Teiles des Anspruches 1 sind.

Ein wesentlicher Bauteil in diesem Zusammenhang sind die beiden Gewinderinge, die stirnseitig an der Mutter angeordnet sind. Diese Gewinderinge haben eine sehr geringe Bauhöhe und können aus einem Lagermetall oder aber auch aus Kunststoff gefertigt werden. Ein Gewinde mit ein oder zwei Gewindegängen kann mit außerordentlich geringen Toleranzen gefertigt werden, so daß diese Gewinderinge, sofern aus metallischen Werkstoffen gefertigt, ein oder zwei eng tolerierte Gewindegänge aufweisen, die als Dichtung zwischen innen und außen wirken. Ist der Gewindering hingegen aus einem Kunststoffmaterial gefertigt, so können die wenigen Gewindegänge so ausgebildet sein, daß sie gleichsam als verformbare Dichtmanschetten wirken, um die erwähnte Dichtung zu erzielen. Diese Gewinderinge verhindern also, unabhängig aus welchem Material gefertigt, einerseits das Eindringen von Schmutz und Staub in die eigentliche Mutter und deren tragendes Gewinde, das ja nicht mit so engen Tolzeranzen gefertigt werden kann, wenn die Laufeigenschaften der Mutter nicht beeinträchtigt werden sollen, andererseits stellen sie in hohem Ausmaße sicher, daß das in der Mutter befindliche Schmiermittel hier in der Mutter auch verbleibt und nicht durch deren Bewegung über die Spindel verschleppt wird, sondern stets dort vorhanden ist, wo es auch tatsächlich benötigt wird. Versuche mit hochbelasteten Spindelhubgetrieben haben dies bestätigt.

Die Maßnahme nach Anspruch 4 begrenzt die Auslenkung der Spindel gegenüber dem Gehäuse auf sehr einfache Weise. Eine vergleichbare Konstruktion für diesen Zweck zeigt die FR-PS 2206 825. Bei dieser vorbekannten Konstruktion ist die Mutter zweiteilig ausgebildet. Um zu verhindern, daß sich diese beiden Mutterhälften willkürlich gegeneinander verdrehen, sind an der Außenseite und parallel zur Spindelachse in den beiden Mutterhälften Nuten angeformt. Diese Nuten nehmen Keile auf, wobei mit dem einen Keil ein im Gehäuse verankerter Stift gelenkig verbunden ist, über welchen die Auslenkung des Gehäuses gegenüber der Spindel bzw. umgekehrt begrenzt wird. Die beim Erfindungsgegenstand dem selben Zweck dienende Konstruktion ist erheblich vereinfacht, besteht sie doch nur aus einem einfachen zylindrischen Stift, der in eine Bohrung ragt. Bei der Bewegung dieser Teile gegeneinander treten keine Reibungsverluste auf, weil hier keine Flächenberührungen vorliegen, wie dies bei der vorbekannten Konstruktion der Fall ist.

Die Maßnahme nach Anspruch 5 bezieht sich auf den Aufbau des Muttergehäuses, das hier beim Erfindungsgegenstand zweiteilig ausgebildet ist, was an sich aus der DD-Patentschrift 157 819 bekannt ist, dessen konkrete Ausgestaltung jedoch erheblich von diesen vorbekannten Konstruktionen abweicht, was auch vor allem gegenüber dem Gehäuse beim Spindelhubgetriebe nach der FR-PS 2206 825 gilt, das aus sieben Teilen gefertigt ist, hier bei dieser vorbekannten Konstruktion also ein Aufwand vorliegt, der nicht als zweckmäßig angesehen werden kann. Nicht nur, daß alle diese Teile getrennt gefertigt und geprüft werden müssen, sie müssen auch noch montiert werden. All dies setzt einen erheblichen Aufwand voraus.

Um die Erfindung zu veranschaulichen, wird anhand der Zeichnung ein Ausführungsbeispiel näher beschrieben, ohne dadurch die Erfindung darauf einzuschränken. Es zeigen:
Fig. 1 die Gewindespindel mit der aufgeschraubten Mutter im Längsschnitt;
die Fig. 2 bis 5 jeweils im Längsschnitt die einzelnen Bauteile;
Fig. 6 ein Detail einer Ausführungsvariante.

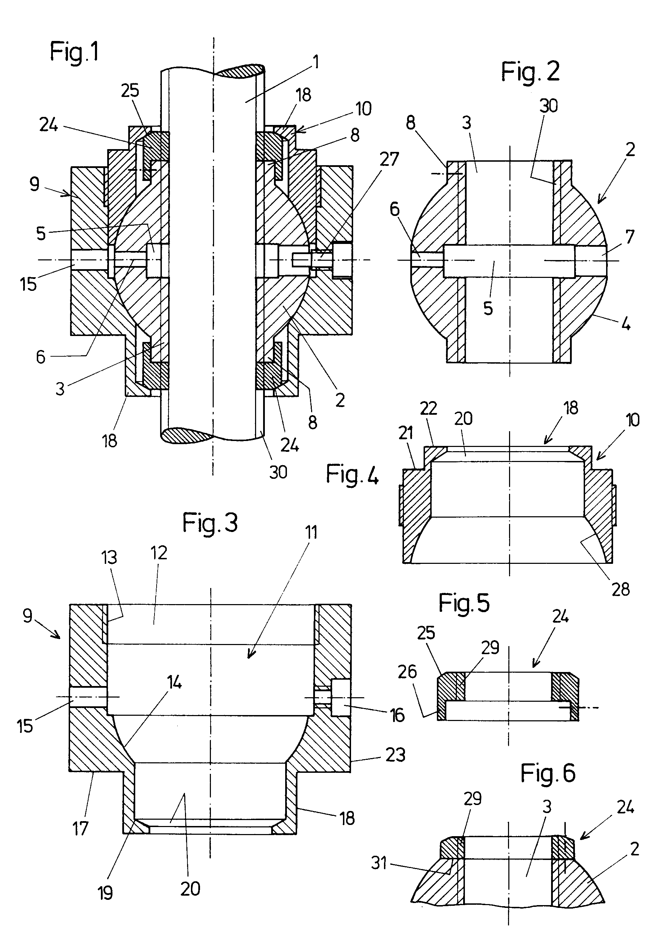

Vom Spindelhubgetriebe ist in Fig. 1 nur ein Teil der Gewindespindel 1 dargestellt ohne den Getriebekasten, gegenüber dem die Gewindespindel ortsfest, jedoch drehbar gelagert ist. Die eigentliche Mutter 2 mit der Gewindebohrung 3 besitzt eine kugelige Außenfläche 4 (Fig. 2). Im Langsmittelbereich ist die Gewindebohrung 3 durch eine innenumlaufende Nut 5 unterbrochen. In diese Nut 5 mündet eine quer zur Achse der Gewindebohrung 3 verlaufende erste Querbohrung 6 sowie ihr gegenüberliegend eine Aussparung 7. Beidseitig besitzt die Mutter 2 koaxial mit der Gewindebohrung 3 liegende Kragen 8.

Diese Mutter 2 ist von einem zweiteiligen Muttergehäuse aufgenommen bzw. umschlossen, das aus einem Grundteil 9 (Fig. 3) und einer Haltemutter 10 (Fig. 4) gebildet ist. Die durchlaufende Ausnehmung 11 des Grundteiles 9 ist etwa über die halbe axiale Länge dieses Teiles als Zylinderfläche 12 mit einem Innengewinde 13 ausgebildet. An diese Zylinderfläche 12 schließt ein, korrespondierend zur kugeligen Außenfläche 4 der Mutter 2 ausgebildeter sphärischer Abschnitt 14 an. Im Übergangsbereich dieser beiden Flächen bzw. Abschnitte 12 und 14 sind Querbohrungen 15 und 16 vorgesehen. An der dem sphärischen Abschnitt 14 benachbarten äußeren Stirnseite 17 des Grundteiles 9 ist eine Schürze 18 einstückig angeformt mit einem nach innen kragenden Rand 19, dessen innere Begrenzungsfläche 20 sphärisch geformt ist, wobei der Mittelpunkt dieser sphärischen Begrenzungsfläche 20 mit dem Mittelpunkt der kugeligen Außenfläche 4 der Mutter 2 zusammenfällt (Fig. 1).

Die Haltemutter 10, die in das Innengewinde 13 eingeschraubt ist, besitzt an ihrer äußeren Stirnseite 21 ebenfalls eine Schürze 22, die in identischer Weise ausgebildet ist wie die Schürze 18 des Grundteiles 9. Die Innenseite 28 dieser Haltemutter 10 ist sphärisch geformt. Die äußere Begrenzungsfläche des Grundteiles 9 kann zylindrisch sein, aber auch mehreckig, auch andere Formen sind hier denkbar.

Ein weiteres Bauteil, das hier paarweise vorgesehen ist, ist der Gewindering 24 (Fig. 5). Die äußere und jeweils obere Begrenzungsfläche 25 dieses Gewinderinges 24 ist korrespondierend zu den Begrenzungsflächen 20 der Schürzen 18 sphärisch geformt. Mit ihrem Rand 26 ist der Gewindering 24 am Kragen 8 der Mutter 2 befestigt, dazu kann eine kleine Schraube verwendet werden. Dieser Gewindering 24 kann aus einem makromolekularen Werkstoff gefertigt sein, wobei sein Gewinde 29 gegenüber dem Gewinde 30 der Gewindespindel 1 ein geringes Übermaß haben kann, so daß bei zusammengebauten Teilen die Gewindegänge des Gewindes 29 des Gewinderinges 24 gleichsam als Dichtmanschetten eng am Gewinde 30 der Gewindespindel 1 anliegen. Das setzt voraus, daß der hier verwendete Werkstoff ein entsprechendes elastisches Formänderungsvermögen besitzt. Der Gewindering 24 kann dabei zur Gänze aus einem solchen makromolekularen Werkstoff gefertigt sein, oder aber er kann zweiteilig ausgebildet sein, wobei das innere Teil, das das Gewinde 29 aufweist, zweckmäßig aus einem solchen makromolekularen Werkstoff besteht, das äußere Teil kann aus Metall gefertigt sein. Ein relativ kurzes Gewinde 29, wie es der Gewindering 24 aufweist, kann - wenn dieser Gewindering 24 aus einem metallischen Werkstoff gefertigt wird, wie er beispielsweise für Lagerzwecke verwendet wird, mit sehr engen Toleranzen gefertigt werden, so daß auch ein metallischer Gewindering 24 die erwähnte Dichtfunktion ausüben kann. Damit die Gewindegänge der Gewinderinge 24 unmittelbar in die auslaufenden Gewindegänge der Mutter 2 übergehen, werden diese Gewinderinge 24 an den Stirnseiten der Mutter 2 lagepositioniert festgelegt. Außer mit der bereits erwähnten Schraube kann dies auch mittels Stiften und Bohrungen geschehen. Beim gezeigten Ausführungsbeispiel dienen zur Aufnahme und Festlegung der Gewinderinge 24 die erwähnten Kragen 8 an der Stirnseite der Mutter 2. Grundsätzlich ist es aber auch möglich, im Stirnbereich der Mutter 2 die kugelig geformte Fläche in eine plane Ringfläche 31 übergehen zu lassen, auf der dann der Gewindering 24 festlegbar ist (Fig. 6).

Die konstruktive Zuordnung der vorstehend anhand der Fig. 2 bis 5 beschriebenen Teile veranschaulicht die Fig. 1. Es ist daraus erkennbar, daß die Querbohrung 6 der Mutter 2 und die Querbohrung 15 des Grundteiles 9 fluchtend zueinander liegen. Über diese Bohrungen 15 und 6 wird ein Schmiermittel eingebracht. Die Bohrung 15 trägt zu diesem Zweck einen hier nicht dargestellten Schmiernippel oder aber einen Verschlußpfropfen. In die Querbohrung 16 des Grundteiles 9 ist ferner ein Stift 27 eingeschraubt, der mit seinem inneren Ende in die Aussparung 7 der Mutter 2 ragt.

Diese Aussparung 7 ist schlitzartig so ausgebildet, daß ihre seitlichen Flächen, die in Fig. 1 parallel zur Zeichenebene vor bzw. hinter dem Stift 27 liegen, diesem unmittelbar benachbart sind, wogegen nach oben und nach unten (Fig. 1) ein Spiel ausgespart ist. Aufgrund der beschriebenen konstruktiven Gestaltung der Einzelteile ist das Muttergehäuse aus den Teilen 9 und 10 gegenüber der eigentlichen Mutter 2 um eine rechtwinkelig zur Zeichenebene stehende Achse verschwenkbar, wobei jedoch das Ausmaß dieser Verschwenkung durch das erwähnte Spiel zwischen Stift 27 und Aussparung 7 begrenzt ist. Damit das Muttergehäuse nicht nur in einer Ebene um einen begrenzten Winkel gegenüber der kugeligen Mutter verschwenkbar ist, ist die durch die Aussparung 7 und den Stift 27 gebildete Schwenkbegrenzung doppelt vorhanden, wobei die zweite Anordnung ebenfalls in der Äquatorebene der kugeligen Mutter 2 liegt, gegenüber der Gezeigten jedoch um 90 Winkelgrade versetzt ist. Diese Schwenkbegrenzung aus Aussparung 7 und Stift 27, doppelt in der Äquatorebene der Mutter 2 vorgesehen, jedoch um 90° gegeneinander versetzt, gestattet die Verschwenkung des Muttergehäuses in Ebenen, die die Achse der Gewindebohrung 3 beinhalten, sie verhindert jedoch das Verdrehen des Muttergehäuses gegenüber der kugeligen Mutter um die Gewindeachse.

Die Gewinderinge 24, die fest mit der Mutter 2 verbunden sind, haben die Aufgabe als Dichtungen zu dienen, die verhindern, daß grober Schmutz, der sich eventuell auf der Gewindespindel 1 absetzt, in das innere der Konstruktion gelangen kann, andererseits haben diese Gewindespindeln auch die Aufgabe zu verhindern, daß das in die Konstruktion eingebrachte und in der dafür vorgesehenen Höhlung (Nut 5) bevorratete Schmiermittel nach außen dringt.

Im gezeigten und beschriebenen Ausführungsbeispiel ist das Muttergehäuse aus den beiden axial zusammenfügbaren Teilen 9 und 10 gebildet. Grundsätzlich wäre es auch möglich, das Muttergehäuse aus zwei Schalen zu bilden, deren Trennebene die Achse der Gewindebohrung 3 enthält, wobei in einem solchen Fall diese beiden Schalen im wesentlichen symmetrisch gestaltet sind.

Das hier nicht dargestellte Konstruktionsteil, das über und mit dem Spindelhubgetriebe verstellt wird, ist am Muttergehäuse befestigt. Durchbiegungen der Gewindespindel oder ungleichmäßige Belastungen werden über die "Kugellagerung" ausgeglichen. Die Einrichtung als solche ist dauerhaft zu schmieren, so daß langfristige Schmierintervalle angesetzt werden können. In der Regel wird das Muttergehäuse bzw. der Grundkörper 9 eine zylindrische Außenkontur aufweisen. Es sind aber für diese Außenkontur auch andere Formen möglich. In diesem Grundkörper 1 sind hier nicht dargestellte Gewindebohrungen vorgesehen, die Befestigungsschrauben aufnehmen, mit welchen die zu versteilenden Bauteile am Muttergehäuse befestigbar sind.

## Patentansprüche

1. Spindelhubgetriebe mit einer antreibbaren Gewindespindel (1) und mindestens einer entlang der sich drehenden Gewindespindel wandernden Mutter (2) mit Einrichtungen zum Befestigen der durch das Spindelhubgetriebe zu betätigenden Bauteile, wobei wenigstens ein Teil der Außenfläche (4) der Mutter als Kugelfläche ausgebildet ist und die Mutter von einem zumindest zweiteiligen Muttergehäuse (9, 10) aufgenommen ist, das mit einem Teil seiner korrespondierend zur Kugelfläche der Mutter ausgebildeten Innenwandung an dieser anliegt und das Muttergehäuse die Einrichtungen zur Befestigung der Bauteile aufweist, dadurch gekennzeichnet, daß an der Mutter (2) beidseitig und koaxial zu ihrer Gewindebohrung (3) Gewinderinge (24) angeordnet sind, an deren äußeren Begrenzungsflächen (25) formschlüssig Schürzen (18) anliegen, die an den das Muttergehäuse bildenden Teilen, nämlich an einem Grundteil (9) und an einer Haltemutter (10) angeformt sind und die Gewindebohrung (3) der Mutter (2) vorzugsweise im mittleren Bereich ihrer Länge eine ein Schmiermittel aufnehmende Höhlung aufweist, die mit einer die Mutter (2) durchsetzenden Querbohrung (6) verbunden ist, die mit einer Bohrung (15) im Grundteil (9) des Muttergehäuses fluchtend liegt, in der ein Schmiernippel angeordnet ist bzw. die mittels eines Pfropfens verschließbar ist.

2. Spindelhubgetriebe nach Anspruch 1, dadurch gekennzeichnet, daß die äußeren Begrenzungsflächen (25) der Gewinderinge (24) sphärisch geformt sind, wobei der Mittelpunkt dieser sphärisch geformten Begrenzungsflächen (25) mit dem Mittelpunkt der kugeligen Außenfläche (4) der Mutter zusammenfällt.

3. Spindelhubgetriebe nach Anspruch 1, dadurch gekennzeichnet, daß die Mutter (2) beidseitig und koaxial zu ihrer Gewindebohrung (3) angeordnete Kragen (8) aufweist, an welchen die Gewinderinge (24) befestigt sind.

4. Spindelhubgetriebe nach Anspruch 1, dadurch gekennzeichnet, daß die Mutter (2) mindestens eine zusätzliche in ihrem axialen Mittelbereich vorgesehene, quer zur Achse ihrer Gewindebohrung (3) verlaufende Aussparung (7) aufweist, in welche ein in an sich bekannter Weise im Grundteil (9) verankerter Stift (27) ragt, und die Aussparung (7) zumindest in der ihre Achse und die der Gewindebohrung (3) enthaltenden Ebene den Stift (27) mit Spiel aufnimmt.

5. Spindelhubgetriebe nach Anspruch 1, dadurch gekennzeichnet, daß das Muttergehäuse in an sich bekannter Weise zweiteilig ausgebildet ist und aus dem Grundteil (9) besteht, dessen axial durchlaufende Ausnehmung (11) etwa über die halbe axiale Länge des Grundteiles (9) als Zylinderfläche (12) mit einem Innengewinde (13) ausgebildet ist, und an diese Zylinderfläche (12) ein korrespondierend zur Kugelfläche der Mutter (2) ausgebildeter, sphärischer Abschnitt (14) anschließt, und in das Innengewinde (13) der Zylinderfläche (12) die den zweiten Teil des Muttergehäuses bildende Haltemutter (10) eingeschraubt ist, die mit ihrer sphärisch geformten Innenseite (28) an der Außenseite der Mutter (2) anliegt.

6. Spindelhubgetriebe nach Anspruch 1, dadurch gekennzeichnet, daß der vom Grundteil (9) aufgenommene axiale Abschnitt der Haltemutter (10) kürzer ist als die halbe axiale Länge des Grundteiles (9).

7. Spindelhubgetriebe nach Anspruch 1, dadurch gekennzeichnet, daß die Gewinderinge (24) mindestens zum Teil aus einem makromolekularen Material gefertigt sind.

8. Spindelhubgetriebe nach Anspruch 1, dadurch gekennzeichnet, daß die Gewinderinge (24) aus einem als Lagermaterial dienenden, metallischen Werkstoff gefertigt sind.

9. Spindelhubgetriebe nach Anspruch 1, dadurch gekennzeichnet, daß die formschlüssig an den Gewinderingen (24) anliegenden Schürzen (18) jeweils einstückig mit den das Muttergehäuse bildenden Teilen, nämlich dem Gewindeteil (9) und der Haltemutter (10) ausgebildet sind.

10. Spindelhubgetriebe nach Anspruch 1, dadurch gekennzeichnet, daß die als Schmiermittelreservoir dienende Höhlung als innere, umlaufende Nut (5) ausgebildet ist.

11. Spindelhubgetriebe nach Anspruch 1, dadurch gekennzeichnet, daß die Querbohrung (6) bzw. deren Achse im wesentlichen rechtwinkelig zur Achse der Gewindebohrung (3) der Mutter (2) verläuft.

12. Spindelhubgetriebe nach Anspruch 1, dadurch gekennzeichnet, daß die Gewinderinge (24) an den Stirnseiten der Mutter (2) lagepositioniert befestigt sind.

## Claims

1. Elevating screw gearing with a drivable threaded spindle (1) and at least one nut (2) which travels along the rotating threaded spindle, with devices for securing the components which are to be actuated by the elevating screw gearing, at least one part of the outer surface (4) of the nut being constructed as a spherical surface and the nut being accommodated by an at least two-part nut housing (9, 10), which rests against the spherical surface of the nut with one part of its inner wall constructed to match the said spherical surface, and the nut housing comprising the devices for securing the components, characterised in that threaded rings (24) are arranged on both sides of the nut (2) and coaxial to the threaded bore (3) of the nut, aprons (18), which are premolded onto the parts forming the nut housing, namely onto a base element (9) and a retaining nut (10), resting in a positive-locking manner against the outer limiting surfaces (25) of the threaded rings (24), and the threaded bore (3) of the nut (2) preferably comprises a cavity accommodating a lubricant mid-way along its length, the cavity being connected to a transverse bore (6) which penetrates the nut (2) and is aligned with a bore (15) in the base element (9) of the nut housing, in which a lubricating nipple is arranged or which can be sealed by means of a plug.

2. Elevating screw gearing according to claim 1, characterised in that the outer limiting surfaces (25) of the threaded rings (24) are spherical, the central point of these spherical limiting surfaces (25) coinciding with the central point of the spherical outer surface (4) of the nut.

3. Elevating screw gearing according to claim 1, characterised in that the nut (2) comprises collars (8) on both sides and coaxial to its threaded bore (3), the threaded rings (24) being secured to the collars (8).

4. Elevating screw gearing according to claim 1, characterised in that the nut (2) comprises at least one additional recess (7), which is provided in the axial central region of the nut (2), extends transversely to the axis of the threaded bore (3) of the nut and into which a pin (27) projects, which is anchored in the base element (9) in a manner known per se, and the recess (7) accommodates the pin (27) with clearance at least in the plane containing the axis of the recess and containing the threaded bore (3).

5. Elevating screw gearing according to claim 1, characterised in that the nut housing is constructed in two parts in a manner known per se and comprises the base element (9), whose axially penetrating recess (11) extends approximately over half the length of the base element (9) as a cylindrical surface (12) with an internal thread (13), and adjoining this cylindrical surface (12) is a spherical section (14) matching the spherical surface of the nut (2), and the retaining nut (10) forming the second part of the nut housing is screwed into the internal thread (13) of the cylindrical surface (12) and rests with its spherical inner surface (28) against the outer surface of the nut (2).

6. Elevating screw gearing according to claim 1, characterised in that the axial section of the retaining nut (10) accommodated by the base element (9) is shorter than half the axial length of the base element (9).

7. Elevating screw gearing according to claim 1, characterised in that the threaded rings (24) are manufactured at least partially from a macromolecular material.

8. Elevating screw gearing according to claim 1, characterised in that the threaded rings (24) are manufactured from a metallic material acting as a bearing material.

9. Elevating screw gearing according to claim 1, characterised in that the aprons (18) resting in a positive-locking manner against the threaded rings (24) are integrally formed in each case with the parts forming the nut housing, namely the threaded element (9) and the retaining nut (10).

10. Elevating screw gearing according to claim 1, characterised in that the cavity acting as a lubricant reservoir is constructed as an internal, circumferential groove (5).

11. Elevating screw gearing according to claim 1, characterised in that the transverse bore (6) or the axis thereof extends substantially at right angles to the axis of the threaded bore (3) of the nut (2).

12. Elevating screw gearing according to claim 1, characterised in that the threaded rings (24) are secured in the correct position to the end faces of the nut (2).

## Revendications

1. Translation à entraînement linéaire à tige filetée comprenant une tige filetée commandée (1) pouvant tourner et au moins un écrou (2) se déplaçant le long de la tige en rotation et portant des moyens de fixation des composants dont la manoeuvre est assurée par la translation à entraînement linéaire, au moins une partie de la surface externe (4) de l'écrou étant sphérique, cet écrou étant logé dans un boîtier (9, 10) réalisé au moins en deux parties dont l'une est au contact de la paroi interne, de forme correspondante de l'écrou dont le boîtier porte les moyens de fixation des composants, caractérisée en ce que :
- l'écrou (2) porte des deux côtés et coaxialement à son alésage fileté (3), des bagues filetées (24) dont les bords externes (25) reposent avec combinaison de formes, sur des portées (18) des parties constituant le logement de l'écrou, à savoir une embase (9) et un écrou de maintien (10) ;
- l'alésage fileté (3) de l'écrou (2) présente à milongueur, une cavité recevant un lubrifiant et reliée à un alésage transversal (6) de l'écrou (2), aligné avec un alésage (15) de l'embase (9) du boîtier de l'écrou et portant lui-même un raccord de lubrification ou pouvant être obturé par un bouchon.

2. Translation à entraînement linéaire à tige filetée selon la revendication 1, caractérisée en ce que les bords externes (25) des bagues filetées (24) ont la forme d'une sphère dont le centre coïncide avec celui de la surface externe sphérique (4) de l'écrou.

3. Translation à entraînement linéaire selon la revendication 1, caractérisée en ce que l'écrou (2) porte, des deux côtés et coaxialement à son alésage fileté (3), des collets (8) sur lesquels sont fixées les bagues filetées (24).

4. Translation à entraînement linéaire selon la revendication 1, caractérisée en ce que l'écrou (2) comporte vers son centre, au moins un évidement (7) perpendiculaire à l'axe de l'alésage fileté (3) et dans lequel pénètre une broche (27) fixée de manière connue dans l'embase (9), l'évidement (7) accueillant la broche (27), avec du jeu au moins dans le plan contenant l'axe de l'évidement et celui de l'alésage fileté (3).

5. Translation à entraînement linéaire selon la revendication 1, caractérisée en ce que le boîtier de l'écrou est, de manière connue, réalisé en deux parties dont l'une, l'embase (9), comporte un évidement axial traversant (11) qui, sur la moitié de la longueur axiale de l'embase (9) présente une surface cylindrique (12) portant un filetage interne (13) et suivie d'une partie sphérique (14) de forme correspondant à celle de l'écrou (2), vissé dans le filetage interne (13) et constituant sous la forme d'un écrou de maintien (10), la seconde partie du boîtier d'écrou, en contact par sa face interne sphérique (28) avec la face externe de l'écrou (2).

6. Translation à entraînement linéaire selon la revendication 1, caractérisée en ce que la partie axiale de l'écrou de maintien (10), logée dans l'embase (9), est plus courte que la moitié de la longueur axiale de l'embase (9).

7. Translation à entraînement linéaire selon la revendication 1, caractérisée en ce que les bagues filetées (24) sont, au moins partiellement, réalisées en un matériau macromoléculaire.

8. Translation à entraînement linéaire selon la revendication 1, caractérisée en ce que les bagues filetées (24) sont réalisées en un matériau métallique du genre utilisé pour réaliser des paliers.

9. Translation à entraînement linéaire selon la revendication 1, caractérisée en ce que les portées (19) qui, avec combinaison de formes, sont en contact avec les bagues filetées (24) appartiennent chacune à une des parties constituant le boîtier de l'écrou, à savoir la partie filetée (9) et l'écrou de maintien (10).

10. Translation à entraînement linéaire selon la revendication 1, caractérisée en ce que la carte servant de réservoir de lubrifiant est constituée par une gorge périphérique interne (5).

11. Translation à entraînement linéaire selon la revendication 1, caractérisée en ce que l'alésage traversant (6) a son axe sensiblement perpendiculaire à celui de l'alésage fileté (3) de l'écrou (2).

12. Translation à entraînement linéaire selon la revendication 1, caractérisée en ce que les bagues filetées (24) sont fixées et positionnées sur les faces frontales de l'écrou (2).
